# EUROPEAN PATENT APPLICATION

(11) **EP 4 726 339 A1**
(43) Date of publication of application: **15.04.2026**
(21) Application number: 25206638.6
(22) Date of filing: 03.10.2025
(51) Int. Cl.: G01G 19/52

(54) **DEVICE FOR DISPENSING AND RECORDING THE DISPENSED AMOUNT OF PRODUCTS, SUCH AS ROUGHAGE AND LITTER, TO PENSION CUSTOMERS OF EQUESTRIAN FARMS**

(30) Priority: 10.10.2024 NL 1044968
(71) Applicant: Wassenaar, Jan Willem, 2211 XZ Noordwijkerhout (NL)
(72) Inventor: Wassenaar, Jan Willem, 2211 XZ Noordwijkerhout (NL)
(74) Representative: Algemeen Octrooi- en Merkenbureau B.V.

(57) **Abstract**

Device for dispensing to a user an amount of products (1), in particular roughage and litter to pension customers of equestrian farms, and recording of the dispensed amount. The device comprises a storage space (2) with an access door (3) having a lock (5) which is operable from a control unit (4), wherein the access door (3) is furthermore provided with a sensor (7) which transmits to the control unit (4) whether or not the door is in an open or closed position. The storage space comprises a weighing platform (6) with weighing sensors (6a) for determining the weight (G) of the supply of the respective product and transmitting it to the control unit. Users can log in via the control unit, following which the current weight of the supply of the respective product is first determined and stored as the initial weight (G1), and thereafter the access door is unlocked. After the product has been removed and the access door has been closed again, the current weight is recorded as the final weight (G2), with the difference in weight between the initial weight (G1) and the final weight (G2) being registered on the account of the respective user.

## Description

The invention relates to a device for dispensing to a user an amount of products, such as bulk materials, hay, silage, straw, flax and other kinds of roughage and litter, and recording the dispensed amount of products, in particular configured for dispensing such products to so-called pension customers of equestrian farms, i.e. horse owners who have placed their horse(s) in a boarding facility for lodging and care, wherein the horse owner himself takes care of feeding his horse(s) and cleaning the stable of his horse(s) by strawing up the stable, using a central stock of products which have been purchased by the equestrian farm.

It is an object of the present invention to provide a system for dispensing roughage and litter from a storage space and recording the dispensed amount without the manager having to perform manual or administrative tasks (in order to record the amount of roughage and litter used).

To this end, the invention provides a device for dispensing products to a user and recording the dispensed amount, in particular configured for dispensing roughage and litter to so-called pension customers of equestrian farms and recording the dispensed amount, which device comprises a closed storage space for storing the respective product, which storage space comprises an access door, provided with a lock which can be operated from a control unit;
wherein the access door is furthermore provided with a sensor, which sensor transmits to the control unit whether or not the access door is in an open or closed position;
wherein the storage space comprises a weighing platform with weighing sensors, configured for placing a supply of the respective product thereon and determining the weight of the current supply of the respective product on this weighing platform and transmitting it to said control unit;
wherein the control unit is configured for storing recorded data of all registered entitled users of the device, for receiving and validating the data of every newly registered user, for recording the current weight of the supply of the respective product as the initial weight after the user has registered, subsequently allowing access to every entitled user, and for recording the current weight of the supply of the respective product as the final weight once the access door has been closed again, wherein the difference in weight between the initial weight and the final weight is recorded on the account of the respective user.

The invention will now be explained in more detail by means of the following description of the figures, in which:

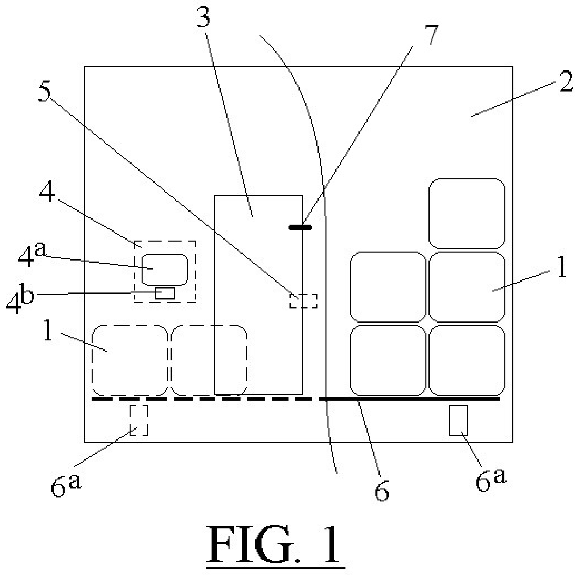

Fig. 1 diagrammatically shows an exemplary embodiment of a device according to the invention.

Fig. 1 diagrammatically shows, the left-hand side in side view, the right-hand side in cross section, an exemplary embodiment of a device according to the invention for dispensing to a user an amount of products 1 and recording the dispensed amount, in particular configured for dispensing roughage and litter to so-called pension customers of equestrian farms.

The device comprises a closed storage space 2 for storing the respective product 1, which space 2 comprises an access door 3, provided with a lock 5 which is operable from a control unit 4; wherein the access door 3 is furthermore provided with a sensor 7, which sensor 7 transmits whether or not the access door 3 is in an open or closed position to the control unit 4.

The storage space 2 comprises a weighing platform 6, configured to be able to place a supply of the respective product 1 thereon and to determine - using weighing sensors 6a - the weight G of the current supply of the respective product 1 on this weighing platform 6 and to communicate this to said control unit 4.

The control unit 4 is configured - for example in the form of a minicomputer or personal computer - to be able to contain recorded data about all registered entitled users of the device, for receiving and validating the data of every user who logs on (the log-in procedure of the user), for unlocking the access door 3 for every entitled user (who successfully logged-on) and recording (after logging on and before unlocking the access door) the current weight G of the supply of the respective product 1 at that moment as the initial weight G1 and recording the current weight of the supply of the respective product 1 at the moment after the access door has been closed again - usually after the user has removed an amount of roughage and litter from the supply and taken it outside via the door - as the final weight G2 and recording the difference in weight (G1-G2) between the initial weight G1 and the final weight G2 on the account of the respective user.

A touchscreen 4a or something similar which can be operated from the outside of the space 2 may, for example, be provided as a user interface between the control unit 4 and the user. However, it is also possible to use a smartphone 4b as an interface which is able to communicate wirelessly, for example via mobile internet or Bluetooth, with the control unit 4 via a wireless interface 4b.

In summary, the invention thus comprises a device for dispensing products (1) to a user, in particular roughage and litter to pension customers of equestrian farms, and recording the dispensed amount. The device comprises a storage space (2) with an access door (3) with a lock (5) which is operable from a control unit (4). The access door (3) is provided with a sensor (7) which transmits to the control unit (4) whether or not the access door is open or closed. The storage space comprises a weighing platform (6) with weighing sensors (6a) for determining the weight (G) of the supply of the respective product (1) and transmitting it to the control unit (4). Users can log on via the control unit (4), following which the current weight (G1) of the supply of the respective product (1) is first determined and stored, after which the access door (3) is unlocked. After the product (1) has been removed and the access door (3) has been closed again, the weight (G2) of the supply is determined again and the difference in weight (G1-G2) is registered on the account of the respective user.

In this way, the present invention provides a system for dispensing and recording an amount of products, such as roughage and litter, which has been dispensed from a storage space without the manager of the latter having to perform manual or administrative operations to this end.

Patent publication US 2011/178630 A1 (hereinafter: D1) discloses a device for dispensing an amount of product, such as roughage or litter, to users and recording thereof. The known system comprises a closed storage space for the respective product with an access door provided with a lock which is operable by a control unit. The control unit records the current weight of the supply as the initial weight (G1) when the user logs on, then unlocks the access door and again records the current weight as the final weight (G2) after the door has been closed. The difference between G1 and G2 is registered on the account of the respective user.

D1 does not mention a sensor which communicates whether or not the door is open or closed to the control unit. Neither does D1 describe an integrated weighing platform with weighing sensors in the storage space, suitable for directly determining the current weight of the supply and communicating it to the control unit. The present invention does provide these features and is thus clearly distinct from D1, so that the invention is therefore new and inventive compared to the known prior art.

## Claims

1. Device for dispensing to a user an amount of products (1) and recording the dispensed amount, in particular configured for dispensing roughage and litter to so-called pension customers of equestrian farms,
which device comprises a closed storage space (2) for storing the respective product, which space comprises an access door (3), provided with a lock (5) which can be operated from a control unit (4),
wherein the control unit is configured for recording the current weight of the supply of the respective product as the initial weight (G1) after the user has logged on, for then unlocking the access door for the user, and for recording the current weight of the supply of the respective product as the final weight (G2) after closing the access door again, wherein the difference in weight between the initial weight (G1) and the final weight (G2) is registered on the account of the respective user,
**characterized in that**
the access door (3) is furthermore provided with a sensor (7) which transmits to the control unit (4) whether or not the door is in the open or closed position, and
wherein the storage space comprises a weighing platform (6) with weighing sensors (6a), configured for placing a supply of the respective product thereon and determining the weight (G) of the current supply of the respective product on this weighing platform and transmitting it to said control unit.
